# EUROPEAN PATENT SPECIFICATION

(11) **EP 2 611 531 B1**
(45) Date of publication and mention of the grant of the patent: **07.01.2015**
(21) Application number: 10759711.4
(22) Date of filing: 30.08.2010
(51) Int. Cl.: B01J 2/16, B01J 8/08

(54) **FLUID BED APPARATUS AND METHOD FOR PROCESSING A PARTICULATE MATERIAL**
FLIESSBETTVORRICHTUNG UND VERFAHREN ZUR VERARBEITUNG VON PARTIKELFÖRMIGEM MATERIAL
APPAREIL À LIT FLUIDISÉ ET PROCÉDÉ DE TRAITEMENT D'UN MATÉRIAU PARTICULAIRE

(43) Date of publication of application: 10.07.2013
(73) Proprietor: GEA Pharma Systems AG, 4416 Bubendorf (CH)
(72) Inventor: VIAROUGE, Daniel, F-68730 Ranspach-le-bas (FR); SOKCEVIC, Dragomir, 4415 Lausen (CH); RIS, Jürg, 4127 Birsfelden (CH); BUBENDORF, Francois, 68730 Ranspach-le-bas (FR)
(74) Representative: Carlsson, Eva
(86) International application number: PCT/IB2010/002121
(87) International publication number: WO 2012/028894

(56) References cited:
- EP-A1- 1 889 655
- EP-A2- 0 770 423
- WO-A1-02/094714
- US-A- 3 735 792

## Description

The present invention relates to a fluid bed apparatus for processing particulate material, comprising a chamber including a plenum, a perforated base plate located above the plenum, an inlet for process gas, an outlet for spent process gas, and a discharge opening having a lower edge and an upper edge and defining a height and an opening area. The invention furthermore relates a method for processing and conveying a particulate material.

The field of application of the fluid bed apparatus is in general the pharmaceutical industry but other fields are conceivable as well, such as e.g. the food, dairy or chemical industry. In such a fluid bed apparatus particulate material is processed by for instance drying, cooling, agglomeration, granulation, pelletizing and/or coating in a fluidisation chamber. A fluid bed may be for batch processing or may be for a continuous process. The present invention relates to both types of processing apparatuses but will be explained here primarily for a batch apparatus. Following the processing in the chamber, the discharge opening is opened and the material is transported to container means through a suitable conduit such as a pipe. The transport of the material is traditionally carried out pneumatically in that conveying air is supplied separately to the pipe by means of a separate pipe connection.

Traditionally, pneumatic discharge and transportation have been performed by using a side-discharge port, a flap for adding conveying air into the pipe, and an injector or pump or any other device generating underpressure. However, this system has some disadvantages and in particular regarding the requirements for good manufacturing practice (GMP), containment, automation, cleaning in place (CIP), handling and cost prize.

Thus, the object of the present invention is to provide a fluid bed apparatus and method in which some or all of the above problems are addressed.

In a first aspect is provided a fluid bed apparatus for processing particulate material, comprising a chamber including a plenum, a perforated base plate located above the plenum, an inlet for process gas, an outlet for spent process gas, and a discharge opening having a lower edge and an upper edge and defining a height and an opening area, characterized in that said base plate is positioned above the lower edge of the discharge opening such that the opening area of the discharge opening is divided into an opening area below the base plate and an opening area above the base plate.

This allows for a 1.5 time quicker discharges as compared to the prior art as the process gas coming from the plenum below the base plate to flow directly into the conveying pipe where it supports the pneumatic product conveying. Thus, by using the process gas for conveying the processed particulate material, there is no need for the prior art device for supplying conveying gas separately. This provides for a more simple and flexible design of the system having less openings and connections for potential contamination of the particulate material. This is particularly important when the apparatus and system are operated under GMP, such as in the pharmaceutical industry.

The position of the base plate in the discharge opening may vary according to a number of factors. In a preferred embodiment, the base plate is positioned at a distance from the lower edge of the discharge opening corresponding to 2 to 95%, preferably 10 to 70%, most preferably 20 to 40%, of the discharge opening height defined between the lower edge and the upper edge of the discharge opening.

The base plate may be substantially plane, but may also be arched, wavy or curved or a combination thereof. The base plate may be positioned substantially horizontally, but may also be slightly inclined or comprise inclined portions. The height is defined as the distance between the bottommost part of the lower edge and an average point of the base plate. That is, if the base plate is plane it is the distance between the bottommost part of the lower edge and the base plate, and if the base plate is inclined, arched, wavy or curved, it is the distance between the bottommost part of the lower edge of the discharge opening and the average point of the base plate where it borders on the discharge opening.

Depending on the shape of the discharge opening, the position of the base plate may be chosen such that the ratio between the opening area below the base plate and the opening area above the base plate lies in the interval 10 and 0.02, preferably 5 to 0.1, most preferably 1 to 0.25.

The discharge opening may have any suitable shape but is preferably substantially circular or rectangular, as both of these shapes are relatively easy to form and connect to other details of the fluid bed apparatus.

In a mechanically simple embodiment, the discharge opening has the form of an aperture in a wall of the chamber, and wherein a discharge device is connected to the wall. This provides for optimal conditions for installation and cleaning.

In one preferred embodiment, the discharge device comprises a pneumatic cylinder having a cylinder rod adapted to be moved between a first position constituting a closed condition of the discharge opening and a second position constituting an open condition of the discharge opening. As one and the same discharge device is used for opening the discharge opening in a mechanically simple manner, the product processed in the chamber is allowed to be discharged along with the process gas following the single operational step of moving the cylinder rod from one position to the other.

Particularly as regards processing of material demanding a high degree of purity, it may be advantageous to protect the cylinder rod of said pneumatic cylinder by a membrane.

In another aspect is provided a method for processing a particulate material comprising the steps of i) providing the particulate material and a process gas in a chamber of a fluid bed apparatus having a base plate separating the particulate material from the incoming process gas; ii) processing the particulate material in the fluid bed apparatus with the process gas; iii) discharging the mixture of processed particulate material and process gas through a discharge opening communicating with both sides of the base plate; iv) conveying the mixture of processed particulate material and process gas to a container means; wherein the mixture of processed particulate material and process gas is conveyed by additional process gas discharged concurrently with said mixture.

The method of the invention thus provides a more simple solution, in which no additional means for conveying processed particulate material is necessary. In the method the conveying is achieved by a difference in pressure between the conveying path, e.g. a pipe, and the interior of the chamber of the fluid bed apparatus. Thus, the present inventors have realized that the pressure provided by the process gas used for conveying the material is sufficient for transferring the processed particulate material to the containment means. In addition, the properties and quality of the processed particulate material is not adversely affected by the admixture with the process gas, as this is the gas utilised for the processing itself.

Thus, by using the process gas for conveying the processed particulate material, further means for supplying conveying gas can be dispensed with. This provides a more simple and flexible design of the system having less openings and connections for potential contamination of the particulate material. This is particularly important when the apparatus and system are operated under GMP, such as in the pharmaceutical industry.

In addition, the solution provided saves cost, both in construction and during operation. The method and apparatus require less maintenance as the apparatus is composed of fewer components. Furthermore, the volume of supplied air and/or gas is reduced, as compared to the prior art, where the process gas as well as the conveying air and/or gas must be supplied. When the volume of total air and/or gas supplied is reduced, the power needed for operating, e.g. a fan or blower, is also reduced, as is the need for purification before being admixed the particulate material.

The construction costs are reduced, as the number of components and conduits and connections are reduced. In particular, an extra pump/fan/blower for the conveying air of the prior art can be avoided, as well as further means for supporting this unit.

The method is flexible as the process gas flow can be adjusted as desired. Less units and streams are required increasing the suitability for use in GMP production.

Furthermore, for the fluid bed apparatus to be used in the pharmaceutical field, containment is a vital issue and this has been made more easily obtainable by the method and apparatus according to the invention. Containment is the area separation from product to personnel and environment by barrier. Containment is used to prevent any negative impacts (contamination) from one area to the other and vice versa. The demands made on equipment used in the pharmaceutical industry are continually rising, especially with regard to the protection of the working environment and the product itself from harmful contaminants.

The maximal discharge mass-ratio of the processed particulate material to process gas inside the conveying pipe may be 100 to 1, typically 40 to 1, most typically 20 to 1. The term mass-ratio refers to the composition of the products inside the conveying-duct during conveying. The products are gas and solids. Air is required for the pneumatically conveying process of solids. This maximal mass ratio is 100 to 1, meaning that there is 100 times more mass of solids in the pipe than mass of gas.

In a particular embodiment, the method further comprises the steps of separating processed particulate material and process gas in a hopper and discharging the product, said product being the processed particulate material, consequently the product obtained is also contemplated. The separation takes place in a separating means such as a cyclone and/or a bag filter. Here the conveying process gas and the process gas mixed with the processed particulate material is separated, said processed particulate material being provided as the product obtained by the method.

The processing is at least one selected from drying, cooling, agglomerating, granulating, pelletizing and coating. Thus, the processed particulate material comprises any of the above forms of the particulate materials as well as process gas.

The particulate material may be an active pharmaceutical ingredient (API) or any other material.

The process gas may be air or any other gas (e.g. Nitrogen, CO2) suitable for the particular field of application.

The nature of the processing procedure, and the particulate material, such as size, density, affinity to process gas, stickiness etc., has in a particular embodiment an impact on the discharge ratio of process gas to the mixture of processed particulate material and process gas.

The process gas is provided to the fluid bed apparatus from a process gas supply by means of a compressing and/or a gas moving means such as a fan, blower or compressor creating a pressure difference. The difference in pressure may be created either by drawing used process gas from the fluid bed or by pushing process gas into the fluid bed or both.

The nature of the compressing and/or gas moving means depends on the process to be performed in the fluid bed apparatus and the ratio of process gas needed in for conveying. In general, the pneumatic transport is defined by airflow multiplied by pressure drop. That means that the lower the ratio of process gas to processed particulate material discharged from the fluid bed, the higher the pressure or velocity of the process gas for conveying, but exceptions may apply. Furthermore and in general, the greater the diameter of the conveying ducts the better the performance of conveying. A suitable pressure difference between the fluidisation chamber and the pipe or conduit used for discharging the product is 10,000-20,000 Pa.

The discharge ratio of process gas below the base plate to the mixture of processed particulate material and process gas above the base plate may be 10 and 0.02, preferably 5 to 0.1, most preferably 1 to 0.25.

In the following, the invention will be described in further detail by means of the following description of preferred embodiments and with reference to the drawings, in which
Fig. 1 shows a schematic overview of a fluid bed apparatus in an embodiment of the invention;
Figs 2 and 3 show schematic side views, on a larger scale, of a detail of the fluid bed apparatus in an embodiment of the invention, in two different conditions; and
Figs 4 and 5 show schematic cross-sectional views of a detail of the fluid bed apparatus discharge opening in two different embodiments.

The fluid bed apparatus is intended for the processing of particulate materials by for instance drying, cooling, agglomeration, granulation, pelletizing and/or coating. The field of application of the fluid bed apparatus is in general the pharmaceutical industry but other fields are conceivable as well. The structure of the fluid bed apparatus depends on the process to be carried out and one example is disclosed in Applicant's co-pending international application No. WO 2009/007788. The fluid bed apparatus according to the the invention may be of the batch or the continuous type. To illustrate the invention a batch type fluid bed apparatus is used; however, the apparatus can be adapted to a continuous process, e.g. as described in WO 2006/067546 (Collette NV). In a continuous type fluid bed apparatus the product typically overflows an adjustable weir plate and is discharged continuously through a rotary air lock or a similar device. The fluid bed apparatus may serve the dual purpose of drying and coating the particles. The drying of the particles operates under the principle of direct drying where direct contact between a heated gas/air and the product occurs to effect heat transfer. Usually, however, the core to be coated is substantially dry at the beginning of the process and the drying capacity is mainly used for evaporating the fluid component of the liquid coating.

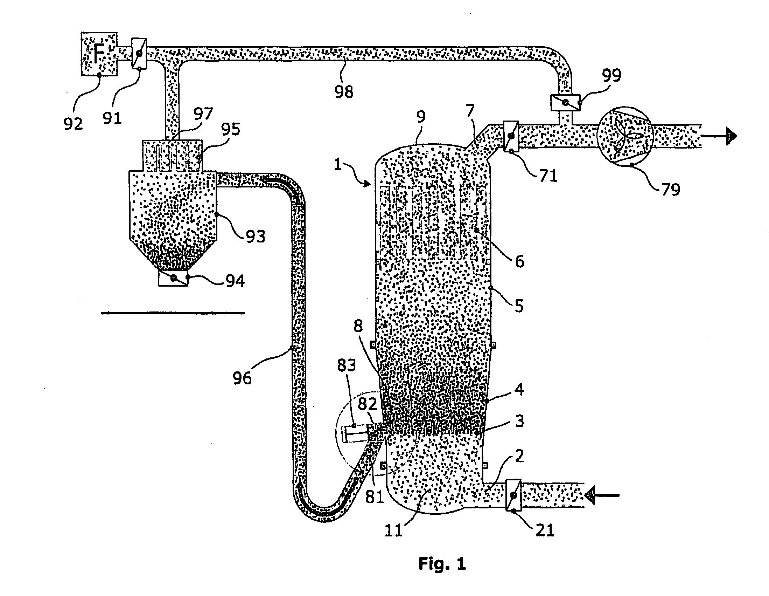

Referring now to the schematic overview of Fig. 1, the fluid bed apparatus comprises a fluidisation or processing chamber 1. At the lower part of the chamber 1, an inlet 2 is provided. Means for supplying process air or gas, for instance comprising a blower and possibly a heater (not shown), are provided to introduce a fluidising stream of process gas into the chamber 1. The fluidising gas stream may be adjusted by means of valve 21 and enters the chamber 1 of the fluid bed apparatus at the inlet 2 and is received in a plenum 11 in the lower part of the chamber 1. The gas is distributed over an air/gas distribution element in the form of a perforated base plate 3 and fluidises the particles to be processed as will be described in further detail below.

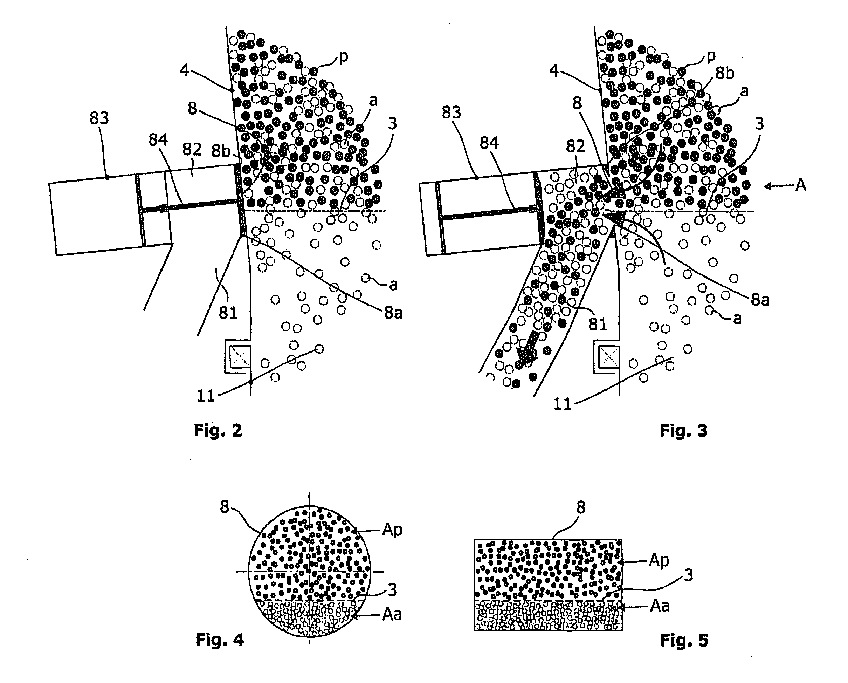

The perforated base plate 3 is circumscribed by a slightly downwardly tapered wall 4 which extends into a cylindrical section 5, which at the top is closed by an end section 9. In the embodiment shown, the base plate 3 is substantially plane and horizontal and is positioned above a lower edge 8a of the discharge opening 8 at a distance from the lower edge 8a corresponding to approximately 25% of the discharge opening height defined between the lower edge 8a and an upper edge 8b of the discharge opening 8. The base plate 3 divides the opening area of the discharge opening 8 into an opening area Aa below the base plate 3 and an opening area Ap above the base plate 3. The ratio between the area below and above the base plate 3, respectively, depends on the shape of the discharge opening 8. In the embodiment shown in Fig. 4, the ratio is approximately 0.24 whereas the ratio of the embodiment shown in Fig. 5 is approximately 0.33.

Above the fluidised layer and in the cylindrical section 5 a filter 6 is provided. The filter retains the particles in the chamber. Usually, the filter is of the bag filter type but may also be a cartridge filter, e.g. of steel. Different filter materials have different ability to separate particles from gas. The filters may be provided with means allowing intermittent release of fine particles entrapped in the pores of the filter.

The spent process gas leaves the chamber 1 at an outlet 7 at the upper part of the chamber via a valve 71 and a suction fan 79 connected to the outlet 7. The spent process gas may be post-treated in an external filtering device (not shown) before it is exhausted to the atmosphere.

Eventually, there is a product discharge opening 8 in the lower part of the chamber 1. At the discharge opening 8, product resulting from the processing of the particulate material in the chamber 1 mixed with process gas is discharged into a first duct 81 and conveyed through a conveying pipe 96 to a container means in a manner to be described in further detail below. In the embodiment shown, the container means is a hopper 93. In the hopper 93, further densification of the product is carried out to be discharged through product outlet 94 to a further container means, which may be any suitable process vessel such as an IBC (Intermediate Bulk Container) or a container for end storage. In the hopper 93, a filter 95 is provided for further filtration of the process gas, and the hopper thus constitutes separation means for the separation of product and process gas.

A further fan 92 is connected to an outlet 97 of the hopper 93 via a valve 91. Thus, by closed valve 99 the process gas through filter 95 flows inversely in direction fluidisation chamber 1. In doing so, the filter 95 is cleaned by the reversed gas flow.

Depending on the process to be carried out in the fluid bed apparatus, i.e. drying, coating, etc., further devices than the ones described in the above may be provided in the form of supplemental gas inlets, nozzles etc., but these devices will not be described within the frame of the present application. Such further devices may include nozzles for cleaning in place (CIP) installed in the housing of the discharge port which clean the area very efficient because of the short distance between the nozzle und the surface. The velocity of the process gas may be adjusted by means of a damper to obtain the particles in a suspension state. The solids in this state are said to be fluidised and the resultant mixture of solids and gas/air behaves like a liquid. This state is termed as "fluid state". It is within the ability of the person skilled in the art to select the specific flow velocity to obtain fluidised particles. Generally, the flow velocity has to be selected from a certain range, which is dependent upon particle size, specific gravity and other properties of the material. Instead of using a perforated plate, a rotary disc having an annular space to the chamber wall may be used to create a pseudo-fluidising state in the chamber, but a genuine fluid bed as described is preferred. The distribution may be adjusted so as to obtain an even fluidisation of particles or alternatively certain parts of the fluid bed may be favoured as far as the amount of process gas is concerned. In some embodiments of the invention the geometry of the perforations in the perforated base plate are formed to cause the particles to move in a certain direction. A NON-SIFTING GILL PLATE™ according to EP 507038 B1 is particularly preferred for some applications of the present invention. The base plate may be welded into position, thus rendering the use of flanges on the walls redundant and facilitates automated CIP. As is the case with all other parts of the fluid bed apparatus, the base plate is standardized for Good Manufacturing Practice (GMP). The position may be substantially horizontal or slightly inclined in order to ease discharge of the product through the discharge opening 8.

The discharge of the product from the chamber 1 and the transport thereof will now be described in further detail by reference in particular to Figs 2 and 3. The discharge opening 8 has the form of an aperture in a wall of the chamber 1, in the embodiment shown in the downwardly tapered wall 4. A discharge device is connected to the wall 4 and comprises a pneumatic cylinder 83 having a cylinder rod 84 adapted to be moved between a first position constituting a closed condition of the discharge opening 8 and a second position constituting an open condition of the discharge opening, cf. Figs 3 and 4 and 5, respectively. In the open condition, the product denoted by dark dots p constituted by the material processed in the chamber 1 is discharged from the chamber 1 through the discharge opening 8 together with gas denoted by light dots a.

It applies to all of the details present at the discharge opening 8 that the design conforms to approved standardized so-called "CIPable design". Thus, in the embodiment shown and described the rod 84 of the pneumatic cylinder is protected by a membrane according to sterile application, and the fact that the discharge opening 8 is formed as an aperture in the wall, without using flanges and gaps, facilitates cleaning. Furthermore, stainless steel parts in contact with product are welded and there is easy access for the cleaning water.

### Examples:

Three positions of the base plate have been tested for a substantially circular discharge opening of 80 mm in diameter.

The base plate was in the first test positioned in the middle between the lower edge and the upper edge of the discharge opening, i.e. at a distance of 50% of the discharge opening height, and a ratio between the opening area Aa below the base plate and the opening area Ap of 1.0. This setting resulted in a through-flow of 18 kg/min and robust functionality, i.e. no blockage.

In the second test the base plate was positioned at 15 mm below the middle of the discharge opening, i.e. at a distance of 25 mm from the lower edge of the discharge opening corresponding to approximately 31% of the discharge opening height, and a ratio between the opening area Aa below the base plate and the opening area Ap above the base plate Ap of approximately 0.36. This setting resulted in an increased through-flow relative to the first test, of approx 48 kg/min and robust functionality, i.e. no blockage.

In the third test the base plate was positioned at 25 mm below the middle of the discharge opening, i.e. at a distance of 15 mm from the lower edge of the discharge opening corresponding to approximately 19% of the discharge opening height, and a ratio between the opening area Aa below the base plate and the opening area Ap above the base plate Ap of approximately 0.15. This setting led to less reliable functionality, with occasional blockage of the discharge opening.

The invention should not be regarded as being limited to the embodiment shown and described in the above but various modifications and combinations of features may be carried out without departing from the scope of the following claims.

## Claims

1. A fluid bed apparatus for processing particulate material, comprising a chamber (1) including a plenum (11), a perforated base plate (3) located above the plenum (11), an inlet (2) for process gas, an outlet (7) for spent process gas, and a discharge opening (8) having a lower edge (8a) and an upper edge (8b) and defining a height and an opening area, **characterized in that** said base plate (3) is positioned above the lower edge (8a) of the discharge opening (8) such that the opening area of the discharge opening (8) is divided into an opening area (Aa) below the base plate (3) and an opening area (Ap) above the base plate (3).

2. A fluid bed apparatus according to claim 1, wherein the base plate (3) is positioned at a distance from the lower edge (8a) of the discharge opening (8) corresponding to 2 to 95%, preferably 10 to 70%, most preferably 20 to 40%, of the discharge opening height defined between the lower edge (8a) and the upper edge (8b) of the discharge opening (8).

3. A fluid bed apparatus according to claim 2, wherein the ratio between the opening area (Aa) below the base plate (3) and the opening area (Ap) above the base plate (3) lies in the interval 10 and 0.02, preferably 5 to 0.1, most preferably 1 to 0.25.

4. A fluid bed apparatus according to any one of the preceding claims, wherein the discharge opening (8) is substantially circular.

5. A fluid bed apparatus according to any one of claims 1 to 3, wherein the discharge opening (8) is substantially rectangular.

6. A fluid bed apparatus according to any one of the preceding claims, wherein the discharge opening (8) has the form of an aperture in a wall of the chamber (1), and wherein a discharge device is connected to the wall.

7. A fluid bed apparatus according to claim 6, wherein the discharge device comprises a pneumatic cylinder (83) having a cylinder rod (84) adapted to be moved between a first position constituting a closed condition of the discharge opening (8) and a second position constituting an open condition of the discharge opening.

8. A fluid bed apparatus according to claim 7, wherein the cylinder rod (84) of said pneumatic cylinder (83) is protected by a membrane.

9. A fluid bed apparatus according to any of the preceding claims, wherein the fluid bed apparatus is connected to a compression and/or fluid moving means, such as a fan or a blower.

10. A method for processing a particulate material comprising the steps of
i) providing the particulate material and a process gas in a chamber of a fluid bed apparatus having a base plate separating the particulate material from the incoming process gas;
ii) processing the particulate material in the fluid bed apparatus with the process gas;
iii) discharging the mixture of processed particulate material and process gas through a discharge opening communicating with both sides of the base plate;
iv) conveying the processed particulate material to a container means;
wherein the processed particulate material is conveyed by the process gas discharged concurrently with said material.

11. A method according to claim 10, wherein the maximal discharge mass-ratio of the processed particulate material to process gas inside the conveying pipe is 100 to 1, typically 40 to 1, most typically 20 to 1.

12. A method according to any of the claims 10 and 11, wherein the processing is at least one selected from drying, cooling, agglomerating, granulating, pelletizing and coating.

13. A method according to any of the claims 10 to 12 further comprising the steps of separating processed particulate material and process gas in a hopper and discharging the product, said product being the processed particulate material.

14. A method according to any of the claims 10 to 13, wherein the discharge ratio of process gas below the base plate to the mixture of processed particulate material and process gas above the base plate is 10 and 0.02, preferably 5 to 0.1, most preferably 1 to 0.25.

## Patentansprüche

1. Fließbettapparatur zum Verarbeiten von partikelförmigem Material, die eine Kammer (1), die ein Plenum (11) einschließt, eine perforierte Basisplatte (3), die oberhalb dem Plenum (11) angeordnet ist, einen Einlass (2) für Prozessgas, einen Auslass (7) für verbrauchtes Prozessgas und eine Austragsöffnung (8), die eine untere Kante (8a) und eine obere Kante (8b) aufweist und eine Höhe und eine Öffnungsfläche definiert, umfasst, **dadurch gekennzeichnet, dass** die Basisplatte (3) oberhalb der unteren Kante (8a) der Austragsöffnung (8) derart positioniert ist, dass die Öffnungsfläche der Austragsöffnung (8) in eine Öffnungsfläche (Aa) unterhalb der Basisplatte (3) und eine Öffnungsfläche (Ap) oberhalb der Basisplatte (3) geteilt ist.

2. Fließbettapparatur nach Anspruch 1, wobei die Basisplatte (3) in einem Abstand von der unteren Kante (8a) der Austragsöffnung (8) entsprechend 2 bis 95%, vorzugweise 10 bis 70%, am meisten bevorzugt 20 bis 40%, der Höhe der Austragsöffnung, definiert zwischen der unteren Kante (8a) und der oberen Kante (8b) der Austragsöffnung (8), positioniert ist.

3. Fließbettapparatur nach Anspruch 2, wobei das Verhältnis zwischen der Öffnungsfläche (Aa) unterhalb der Basisplatte (3) und der Öffnungsfläche (Ap) oberhalb der Basisplatte (3) im Intervall von 10 und 0,02, vorzugsweise 5 bis 0,1, am meisten bevorzugt 1 bis 0,25, liegt.

4. Fließbettapparatur nach irgendeinem der vorhergehenden Ansprüche, wobei die Austragsöffnung (8) im Wesentlichen kreisförmig ist.

5. Fließbettapparatur nach irgendeinem der Ansprüche 1 bis 3, wobei die Austragsöffnung (8) im Wesentlichen rechteckig ist.

6. Fließbettapparatur nach irgendeinem der vorhergehenden Ansprüche, wobei die Austragsöffnung (8) die Form einer Öffnung in einer Wand der Kammer (1) hat, und wobei eine Auslassvorrichtung mit der Wand verbunden ist.

7. Fließbettapparatur nach Anspruch 6, wobei die Auslassvorrichtung einen pneumatischen Zylinder (83) mit einer Zylinder- bzw. Kolbenstange (84), die für eine Bewegung zwischen einer ersten Position, die einen geschlossenen Zustand der Austragsöffnung (8) darstellt, und einer zweiten Position, die einen offenen Zustand der Austragsöffnung darstellt, angepasst ist, umfasst.

8. Fließbettapparatur nach Anspruch 7, wobei die Zylinderstange (84) des pneumatischen Zylinders (83) durch eine Membran geschützt ist.

9. Fließbettapparatur nach irgendeinem der vorhergehenden Ansprüche, wobei die Fließbettapparatur mit einer Kompressionsund/oder Fließbewegungseinrichtung verbunden ist, wie einem Gebläse oder einem Ventilator.

10. Verfahren zur Verarbeitung eines partikelförmigen Materials, umfassend die Schritte des
i) Bereitstellens des teilchenförmigen Materials und eines Prozessgases in einer Kammer einer Fließbettapparatur mit einer Basisplatte, die das partikelförmige Material von dem hereinkommenden Prozessgas trennt;
ii) Verarbeitens des partikelförmigen Materials in der Fließbettapparatur mit dem Prozessgas;
iii) Austragens des Gemisches von verarbeitetem partikelförmigem Material und Prozessgas durch eine Austragsöffnung, die mit beiden Seiten der Basisplatte kommuniziert;
iv) Förderns des verarbeiteten partikelförmigen Materials zu einer Behältereinrichtung;
wobei das verarbeitete partikelförmige Material durch das Prozessgas, das gleichzeitig mit dem Material ausgetragen wird, gefördert wird.

11. Verfahren nach Anspruch 10, wobei das maximale Austrags-Massenverhältnis des verarbeiteten partikelförmigen Materials zum Prozessgas innerhalb des Förderrohrs 100 bis 1, typischerweise 40 bis 1, am typischsten 20 bis 1, beträgt.

12. Verfahren nach irgendeinem der Ansprüche 10 und 11, wobei das Verarbeiten wenigstens eines ausgewählt aus Trocknen, Kühlen, Agglomerieren, Granulieren, Pelletieren und Beschichten bzw. Überziehen ist.

13. Verfahren nach irgendeinem der Ansprüche 10 bis 12, weiterhin umfassend die Schritte des Trennens von verarbeitetem partikelförmigen Material und Prozessgas in einem Trichter und des Austragens des Produkts, wobei das Produkt das verarbeitete partikelförmige Material ist.

14. Verfahren nach irgendeinem der Ansprüche 10 bis 13, wobei das Austragsverhältnis von Prozessgas unterhalb der Basisplatte zu dem Gemisch aus verarbeitetem partikelförmigen Material und Prozessgas oberhalb der Basisplatte 10 und 0,02, vorzugsweise 5 bis 0,1, am meisten bevorzugt 1 bis 0,25, beträgt.

## Revendications

1. Appareil à lit fluidisé pour le traitement d'un matériau particulaire, comprenant une chambre (1) qui contient un espace de répartition (11), une plaque de base perforée (3) située au-dessus de l'espace de répartition (11), une admission (2) pour le gaz de traitement, une sortie (7) pour le gaz de traitement résiduaire, et une ouverture d'évacuation (8) qui présente un bord inférieur (8a) et un bord supérieur (8b) et qui définit une hauteur et une zone d'ouverture, **caractérisé en ce que** la plaque de base (3) est placée au-dessus du bord inférieur (8a) de l'ouverture d'évacuation (8) de telle sorte que ladite zone d'ouverture de l'ouverture d'évacuation (8) est divisée en une zone d'ouverture (Aa) située au-dessous de la plaque de base (3) et une zone d'ouverture (Ap) située au-dessus de la plaque de base (3).

2. Appareil à lit fluidisé selon la revendication 1, étant précisé que la plaque de base (3) est placée à une distance du bord inférieur (8a) de l'ouverture d'évacuation (8) qui correspond à 2 à 95 %, de préférence 10 à 70 %, plus spécialement 20 à 40 % de la hauteur d'ouverture d'évacuation définie entre le bord inférieur (8a) et le bord supérieur (8b) de l'ouverture d'évacuation (8).

3. Appareil à lit fluidisé selon la revendication 2, étant précisé que le rapport entre la zone d'ouverture (Aa) située au-dessous de la plaque de base (3) et la zone d'ouverture (Ap) située au-dessus de la plaque de base (3) est situé dans l'intervalle de 10 et 0,02, de préférence de 5 à 0,1, plus spécialement de 1 à 0,25.

4. Appareil à lit fluidisé selon l'une quelconque des revendications précédentes, étant précisé que l'ouverture d'évacuation (8) est globalement circulaire.

5. Appareil à lit fluidisé selon l'une quelconque des revendications 1 à 3, étant précisé que l'ouverture d'évacuation (8) est globalement rectangulaire.

6. Appareil à lit fluidisé selon l'une quelconque des revendications précédentes, étant précisé que l'ouverture d'évacuation (8) a la forme d'un orifice prévu dans la paroi de la chambre (1) et qu'un dispositif d'évacuation est raccordé à ladite paroi.

7. Appareil à lit fluidisé selon la revendication 6, étant précisé que le dispositif d'évacuation comprend un vérin pneumatique (83) qui comporte une tige de vérin (84) apte à être déplacée entre une première position qui constitue un état fermé de l'ouverture d'évacuation (8), et une seconde position qui constitue un état ouvert de l'ouverture d'évacuation.

8. Appareil à lit fluidisé selon la revendication 7, étant précisé que la tige de vérin (84) du cylindre pneumatique (83) est protégée par une membrane.

9. Appareil à lit fluidisé selon l'une quelconque des revendications précédentes, étant précisé que l'appareil à lit fluidisé est relié à des moyens de compression et/ou de déplacement de fluide tels qu'un ventilateur ou une soufflante.

10. Procédé de traitement d'un matériau particulaire, comprenant les étapes qui consistent
i) à disposer le matériau particulaire et un gaz de traitement dans une chambre d'un appareil à lit fluidisé comportant une plaque de base qui sépare le matériau particulaire du gaz de traitement entrant ;
ii) à traiter le matériau particulaire dans l'appareil à lit fluidisé avec le gaz de traitement ;
iii) à évacuer le mélange de matériau particulaire traité et de gaz de traitement par une ouverture d'évacuation qui communique avec les deux côtés de la plaque de base ;
iv) à acheminer le matériau particulaire traité jusqu'à des moyens formant contenant ;
étant précisé que le matériau particulaire traité est acheminé par le gaz de traitement évacué en même temps que ledit matériau.

11. Procédé selon la revendication 10, étant précisé que le rapport maximal de la masse d'évacuation de matériau particulaire traité au gaz de traitement à l'intérieur du conduit d'acheminement est de 100 à 1, typiquement de 40 à 1, plus typiquement de 20 à 1.

12. Procédé selon l'une quelconque des revendications 10 et 11, étant précisé que le traitement consiste en l'un au moins des traitements suivants : séchage, refroidissement, agglomération, granulation, pastillage et enrobage.

13. Procédé selon l'une quelconque des revendications 10 à 12, comprenant également les étapes de séparation du matériau particulaire traité et du gaz de traitement dans une trémie, et d'évacuation du produit, ledit produit étant le matériau particulaire traité.

14. Procédé selon l'une quelconque des revendications 10 à 13, étant précisé que le rapport d'évacuation du traitement de gaz au-dessous de la plaque de base au mélange de matériau particulaire traité et de gaz traité au-dessus de la plaque de base est de 10 et 0,02, de préférence de 5 à 0,1, de préférence de 1 à 0,25.
